# EUROPEAN PATENT SPECIFICATION

(11) **EP 4 082 914 B1**
(45) Date of publication and mention of the grant of the patent: **03.09.2025**
(21) Application number: 22167996.2
(22) Date of filing: 12.04.2022
(51) Int. Cl.: B64D 27/24, B64D 33/08, B64D 41/00

(54) **FLIGHT VEHICLE**
FLUGVORRICHTUNG
VÉHICULE VOLANT

(30) Priority: 26.04.2021 JP 2021074363
(43) Date of publication of application: 02.11.2022
(73) Proprietor: TOYOTA JIDOSHA KABUSHIKI KAISHA, Toyota-shi, Aichi-ken, 471-8571 (JP)
(72) Inventor: KANEKO, Tomohiko, Toyota-shi, 471-8571 (JP)
(74) Representative: D Young & Co LLP

(56) References cited:
- WO-A1-2020/257646
- WO-A2-2023/114353
- JP-A- 2018 176 920
- US-A- 5 106 035
- US-A- 6 053 266
- US-A1- 2020 355 117
- LATZ GUNNAR ET AL: "WATER-BASED RANKINE-CYCLE WASTE HEAT RECOVERY SYSTEMS FOR ENGINES: CHALLENGES AND OPPORTUNITIES", vol. 115, 1 January 2015 (2015-01-01), pages 1 - 10, XP055956082, Retrieved from the Internet <URL:http://asme-orc2015.fyper.com/online/proceedings/documents/115.pdf> [retrieved on 20220830]
- LAPEÑA-REY NIEVES ET AL: "First Fuel-Cell Manned Aircraft", vol. 47, no. 6, 1 November 2010 (2010-11-01), US, pages 1825 - 1835, XP055955995, ISSN: 0021-8669, Retrieved from the Internet <URL:https://arc.aiaa.org/doi/pdfplus/10.2514/1.42234> [retrieved on 20220830], DOI: 10.2514/1.42234

## Description

### FIELD

The present disclosure relates to a flight vehicle.

### BACKGROUND

Patent Literature 1 discloses the mechanism of driving a hydrogen circulation pump in a hydrogen circulation system and an air compressor in an air supply system by one and the same drive motor, in a fuel cell system. Patent Literature 2 discloses that a cooling water pump (cooling medium supply device) and an air compressor are coaxially arranged in a fuel cell system.

### CITATION LIST

### Patent Literature

Patent Literature 1: JP 2005-346949 A
Patent Literature 2: JP 2012-3889 A
US 2020/355117 A1 discloses a multi-stage turbocharging compressor for fuel cell systems, wherein a coolant pump is driven by a propeller shaft, the coolant being used in an Organic Rankine Cycle machine and wherein for example R134a, R235fa or Iso-Butane can be used.
JP 2018 176920 A discloses a flying object.

### SUMMARY

### Technical Problem

Particular aspects of the invention are set out in the appended claims. A flight vehicle that uses a fuel cell as a power source for flight needs pumps and compressors for the flow of various fluids such as hydrogen, cooling water and air. In order to drive them, a lot of driving devices (motors and inverters) are disposed in the flight vehicle. In contrast, because of its characteristics, the lightness of the flight vehicle is even more important compared with other transport equipment. In such a view, it is desired to reduce the weight of the driving devices.

An object of the present disclosure is to provide a flight vehicle having a weight reduced by reducing the number of driving devices.

### Solution to Problem

The present application discloses a flight vehicle including a fuel cell, and a motor to drive a propeller, the flight vehicle comprising: a pump by which cooling water for cooling the fuel cell is circulated, the pump being driven by the motor to drive a propeller.

The flight vehicle may further comprise: a compressor to supply air to the fuel cell, the compressor being driven by another driving device that is different from the motor to drive a propeller.

The flight vehicle may further comprise: a pump by which hydrogen is supplied to the fuel cell, the pump by which hydrogen is supplied being driven by the other driving device to drive the compressor.

### Advantageous Effects

The weight of the flight vehicle according to the present disclosure can be reduced because an apparatus other than a propeller is also driven by a motor to drive a propeller and thus the flight vehicle does not need a driving device for the other apparatus.

### BRIEF DESCRIPTION OF DRAWINGS

Fig. 1 shows an external appearance of an aircraft 1 (flight vehicle);
Fig. 2 is a conceptual view explanatorily showing a configuration for the generation of electricity by a fuel cell 10;
Fig. 3 is a conceptual view explanatorily showing the relationship among apparatuses driven by the fuel cell 10 in the first embodiment; and
Fig. 4 is a conceptual view explanatorily showing the relationship among apparatuses driven by the fuel cell 10 in the second embodiment.

### DESCRIPTION OF EMBODIMENTS

### 1. First Embodiment

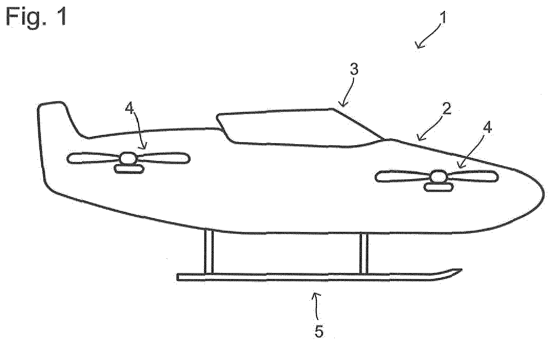

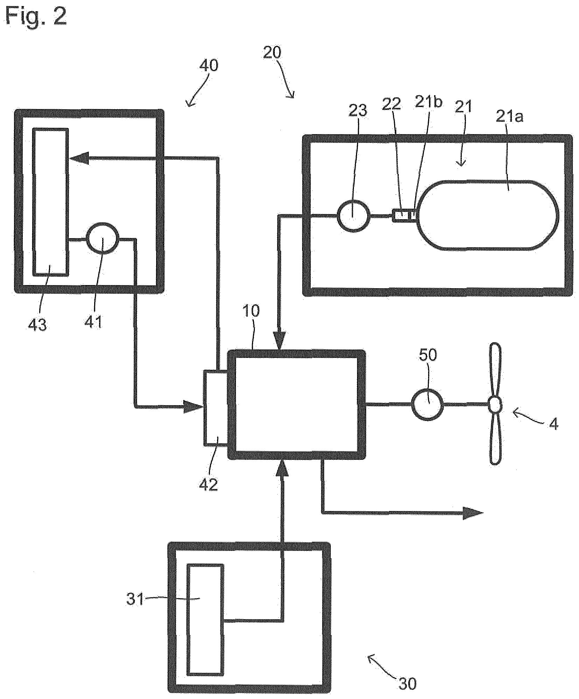

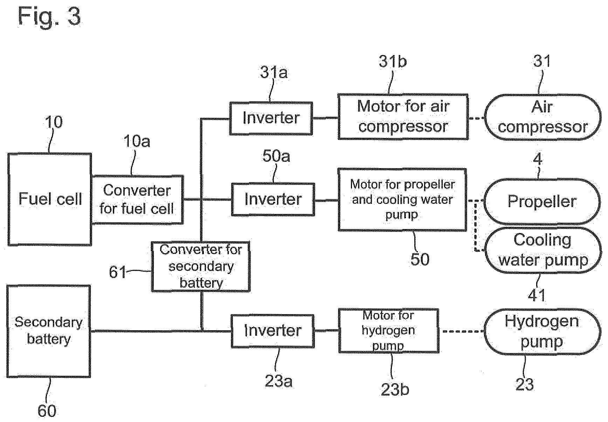

Figs. 1 to 3 explanatorily show the configuration of a flight vehicle (aircraft 1) with a fuel cell as a power source for flight which is an example according to the first embodiment. Fig. 1 shows an external appearance of this flight vehicle (aircraft 1). Fig. 2 schematically shows the configuration for the generation of electricity by a fuel cell 10 that is included in the flight vehicle (aircraft 1). Fig. 3 schematically shows the relationship among each of the components.

### 1.1. External Appearance

As can be seen in Fig. 1, the flight vehicle (aircraft 1) according to the present embodiment is provided with a body 2 that is a housing for housing thereinside each component necessary for flight, and a cockpit 3 on an upper portion of the body 2, for a person to get into and pilot the flight vehicle (aircraft 1). On the flight vehicle (aircraft 1) according to the present embodiment, propellers 4 for taking-off and propulsion of the flight vehicle (aircraft 1) which are four in total are arranged: the four propellers 4 are respectively in the left front, right front, left back and right back of the body 2. Further, a leg 5 that grounds, and supports the body 2 when the aircraft lands is provided on a lower portion of the body 2.

The aircraft 1 will be described here as one embodiment of a flight vehicle for the description. The scope of the flight vehicle according to the present disclosure may include various embodiments of the flight vehicle as long as a fuel cell is used therein as a power source for a propeller. The external appearance of the flight vehicle, the position of the propeller, the number of the propeller(s), etc. are not particularly limited. Accordingly, the size, the capacity, etc., that is, the scale of the flight vehicle is not limited either. The scope of the flight vehicle according to the present disclosure also includes a drone and the like which are unmanned flight vehicles that fly through wireless operation or based on programs of flight routes which are prepared in advance.

### 1.2. Generation of Electricity by Fuel Cell

The flight vehicle (aircraft 1) according to the present disclosure is made in such a way that the propellers are driven by electric power generated by the fuel cell so that power necessary for flight is obtained. Therefore, as can be seen in Fig. 2, the fuel cell 10 is electrically connected to a motor 50 to drive the propellers. This motor 50 to drive the propellers drives the propellers 4. Hydrogen from a hydrogen supply system 20 and air from an air supply system 30 are supplied to the fuel cell 10, whereby the fuel cell 10 generates electricity. Cooling water is supplied from a circulating cooling water system 40 to the fuel cell 10, to cool the fuel cell 10. Each of the components will be described below.

### 1.2a. Fuel Cell

The fuel cell 10 is as is known. For example, the fuel cell 10 is formed by housing a fuel cell stack of plural stacked fuel cells in a case for a stack. The plural fuel cells are each made by holding a membrane-electrode assembly (MEA) between two separators. The MEA is a layered product of a solid polymer membrane, an anode catalyst layer, a cathode catalyst layer, an anode gas diffusion layer, a cathode gas diffusion layer, etc.

### 1.2b. Hydrogen Supply System

The hydrogen supply system 20 is a system that supplies hydrogen to the fuel cell 10 via piping. The hydrogen supply system 20 is as is known, and is provided with a hydrogen tank 21, a valve 22 and a hydrogen pump 23.

The hydrogen tank 21 is a tank in which hydrogen is stored, and is provided with a hydrogen tank body 21a in the form of a container, and a mouthpiece 21b whereby hydrogen stored in the hydrogen tank body 21a is taken out via the mouthpiece 21b.

The valve 22 is attached to the mouthpiece 21b to control the hydrogen so that the hydrogen enters or exits the hydrogen tank 21.

The hydrogen pump 23 is a pump by which the hydrogen taken out of the hydrogen tank 21 via the valve 22 is fed to the fuel cell 10. The specific aspect of the hydrogen pump 23 is not particularly limited. A known hydrogen pump that is applied to a power generation system using a fuel cell may be used as the hydrogen pump 23.

### 1.2c. Air Supply System

The air supply system 30 is a system that supplies air to the fuel cell 10 via piping. The air supply system 30 is as is known, and is provided with an air compressor 31. The air compressor 31 takes in and compresses ambient air, to feed the air to the fuel cell 10. The specific aspect of the air compressor 31 is not particularly limited. A known air compressor that is applied to a power generation system using a fuel cell may be used as the air compressor 31.

### 1.2d. Circulating Cooling Water System

The circulating cooling water system 40 circulates cooling water via piping to supply the cooling water to the fuel cell 10 and collect the cooling water that has cooled the fuel cell 10, to emit heat to the outside air. The circulating cooling water system 40 is as is known, and is provided with a cooling water pump 41, a heat exchanger for cooling 42, and a radiator 43.

The cooling water pump 41 is a pump by which cooling water is circulated. A known one may be used.

The heat exchanger for cooling 42 is disposed on the fuel cell 10. The heat exchanger 42 absorbs the heat caused by the generation of electricity by the fuel cell 10, thereby cooling the fuel cell 10. The specific aspect of the heat exchanger for cooling 42 is not particularly limited. A known heat exchanger for cooling which is applied to a power generation system using a fuel cell may be used as the heat exchanger 42.

The radiator 43 is a heat exchanger from which the heat absorbed from the fuel cell 10 is radiated to the outside air. The heat from the cooling water including the heat absorbed from the fuel cell 10 is emitted to the outside air by the radiator 43 whereby the cooling water can cool the fuel cell 10 again. The specific aspect of the radiator 43 is not particularly limited. A known radiator that is applied to a power generation system using a fuel cell may be used as the radiator 43.

With the configuration as described above, cooling water passes through each component via the piping, thereby circulating as follows. The cooling water arriving at the heat exchanger for cooling 42 by means of the cooling water pump 41 absorbs heat from the fuel cell 10, and moves to the radiator 43. The cooling water arriving at the radiator 43 emits the heat absorbed from the fuel cell 10 to the outside air, and reaches the cooling water pump 41 again.

### 1.3. Driving by Generated Electricity

Fig. 3 schematically shows the relationship among the components driven using the electric power generated by the fuel cell 10.

The propellers 4 and the cooling water pump 41 are driven by a common motor thereto (motor for propellers and a cooling water pump 50), using the electric power generated by the fuel cell 10 via a converter for a fuel cell 10a, and inverters 50a. Power for flight is obtained by driving the propellers 4. Cooling water circulates through the circulating cooling water system 40 as described above by driving the cooling water pump 41.

The air compressor 31 is driven by a motor for an air compressor 31b, using the electric power generated by the fuel cell 10 via the converter for a fuel cell 10a, and an inverter 31a. The air compressor 31 is driven, whereby air is supplied from the air supply system 30 to the fuel cell 10 as described above.

The hydrogen pump 23 is driven by a motor for a hydrogen pump 23b, using the electric power generated by the fuel cell 10 via the converter for a fuel cell 10a, and an inverter 23a. The hydrogen pump 23 is driven, whereby hydrogen is supplied from the hydrogen supply system 20 to the fuel cell 10 as described above.

An electric system for the driving by the generated electricity includes a secondary battery 60 provided in the aircraft 1. The secondary battery 60 is also electrically connected to, and can drive each of the motor for an air compressor 31b, the motor for propellers and a cooling water pump 50, and the motor for a hydrogen pump 23b via a secondary battery converter 61 and/or the inverters 23a, 31a and 50a.

Electric power is supplied by the secondary battery 60 when the aircraft 1 is started, and, in a case other than the foregoing, may be also supplied in case of emergency. The secondary battery 60 is made so as to be able to be charged with the electric power from the fuel cell 10.

Such a structure can make at least a driving device only for a pump by which cooling water is circulated (motor or inverter that is only for a cooling water pump) unnecessary. This makes it possible to reduce the number of the components for forming the flight vehicle, to achieve reduction of the weight of the flight vehicle.

One and the same motor may be used for driving a propeller and for driving a cooling water pump because a gentle temperature change in cooling water is adequate and no quick response is needed so that the motor performance is adequate as long as the cooling water is circulated as linked to the rotation of the propeller.

The flight vehicle may be formed as described above because the propeller has seldom stopped since the start till the end of a flight so that cooling water linked to this has seldom stopped. For example, a motor of an automobile often stops because the automobile repeats movements and stops while running from a starting point to a destination. Stops of the cooling water whenever the automobile stops may lead to failure in cooling.

Like the present embodiment, a device to drive a compressor to supply air to a fuel cell is preferably driven by a driving device (the inverter 31a or the motor for an air compressor 31b) other than a device to drive the propeller (the inverter 50a or the motor for propellers and a cooling water pump 50). This makes it possible to supply air for generating electricity to the fuel cell 10 independently from the driving of the propellers 4, and to smoothly switch electric power by which the propellers 4 are driven to that by the fuel cell 10 with good response.

### 2. Second Embodiment

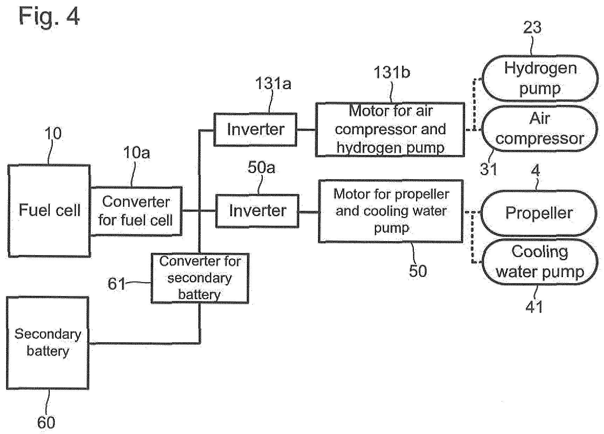

Fig. 4 explanatorily shows the configuration of a flight vehicle (aircraft 1) with a fuel cell as a power source for flight which is an example according to the second embodiment. Fig. 4 corresponds to Fig. 3, and schematically shows the relationship among each of the components. The external appearance of the aircraft 1 (Fig. 1) and the configuration for the generation of electricity by the fuel cell 10 (Fig. 2) in the second embodiment may be considered the same as in the first embodiment, and thus the description thereof will be omitted. Therefore, driving by the generated electricity in the second embodiment will be described here.

The propellers 4 and the cooling water pump 41 are driven by a common motor thereto (motor for propellers and a cooling water pump 50), using the electric power generated by the fuel cell 10 via the converter for a fuel cell 10a, and the inverters 50a. Power for flight is obtained by driving the propellers 4. Cooling water circulates through the circulating cooling water system 40 as described above by driving the cooling water pump 41.

The air compressor 31 and the hydrogen pump 23 are driven by a common motor thereto (motor for an air compressor and a hydrogen pump 131b), using the electric power generated by the fuel cell 10 via the converter for a fuel cell 10a, and an inverter 131a. The air compressor 31 is driven, whereby air is supplied from the air supply system 30 to the fuel cell 10 as described above. The hydrogen pump 23 is driven, whereby hydrogen is supplied from the hydrogen supply system 20 to the fuel cell 10 as described above.

An electric system for the driving by the generated electricity includes the secondary battery 60 provided in the aircraft 1. The secondary battery 60 is also electrically connected to, and can drive each of the motor for an air compressor and a hydrogen pump 131b, and the motor for propellers and a cooling water pump 50 via the secondary battery converter 61 and the inverters 131a and 50a.

Electric power is supplied by the secondary battery 60 when the aircraft 1 is started, and, in a case other than the foregoing, may be also supplied in case of emergency. The secondary battery 60 is made so as to be able to be charged with the electric power from the fuel cell 10.

Such a structure can make a driving device only for a pump by which cooling water is circulated (motor or inverter that is only for a cooling water pump) unnecessary. This makes it possible to reduce the number of the components for forming the flight vehicle, to achieve reduction of the weight of the flight vehicle.

One and the same motor may be used for driving a propeller and for driving a cooling water pump because a gentle temperature change in cooling water is adequate and no quick response is needed so that the motor performance is adequate as long as the cooling water is circulated as linked to the rotation of the propeller.

The flight vehicle may be formed as described above because the propeller has seldom stopped since the start till the end of a flight so that cooling water linked to this has seldom stopped. For example, a motor of an automobile often stops because the automobile repeats movements and stops while running from a starting point to a destination. Stops of the cooling water whenever the automobile stops may lead to failure in cooling.

In the present embodiment, a common driving device may be used as a driving device to supply hydrogen to the fuel cell (inverter or motor) and a driving device to supply air (inverter or motor), which further contributes to the weight reduction.

It is effective for the flight vehicle to link the supply of air to the supply of hydrogen because the propeller has seldom stopped since the start till the end of a flight. In contrast, an automobile repeats movements and stops while running from a starting point to a destination: during the stop of the motor, the supply of air to a fuel cell may be stopped but the supply of hydrogen thereto cannot be stopped. Thus, it is difficult to link the supply of air to the supply of hydrogen in the automobile.

### Reference Signs List

1 aircraft (flight vehicle)
2 body
3 cockpit
4 propeller
5 leg
10 fuel cell
20 hydrogen supply system
21 hydrogen tank
22 valve
23 hydrogen pump
30 air supply system
31 air compressor
40 circulating cooling water system
41 cooling water pump
42 heat exchanger for cooling
43 radiator
50 motor for a propeller and a cooling water pump
131b motor for an air compressor and a hydrogen pump

## Claims

1. A flight vehicle (1) including a fuel cell (10), and a motor (50) configured to drive a propeller (4), and a circulating cooling water system (40), the flight vehicle comprising:
a cooling water pump (41) by which cooling water of the circulating cooling water system is circulated for cooling the fuel cell, the pump being driven by the motor configured to drive a propeller.

2. The flight vehicle according to claim 1, further comprising:
a driving device that is different from the motor to drive the propeller, and
a compressor (31) to supply air to the fuel cell, the compressor configured to be driven by the driving device.

3. The flight vehicle according to claim 2, further comprising:
a pump (23) by which hydrogen is supplied to the fuel cell, the pump configured to be driven by the driving device to drive the compressor.

## Patentansprüche

1. Fluggerät (1), das eine Brennstoffzelle (10), einen Motor (50), der konfiguriert ist, einen Propeller (4) anzutreiben, und ein Kühlwasserumwälzsystem (40) enthält, wobei das Fluggerät Folgendes umfasst:
eine Kühlwasserpumpe (41), durch die Kühlwasser des Kühlwasserumwälzsystems umgewälzt wird, um die Brennstoffzelle zu kühlen, wobei die Pumpe durch den Motor, der konfiguriert ist, den Propeller anzutreiben, angetrieben wird.

2. Fluggerät nach Anspruch 1, das ferner Folgendes umfasst:
eine Antriebsvorrichtung, die von dem Motor für den Antrieb des Propellers verschieden ist, und
einen Kompressor (31) zum Zuführen von Luft zu der Brennstoffzelle, wobei der Kompressor konfiguriert ist, durch die Antriebsvorrichtung angetrieben zu werden.

3. Fluggerät nach Anspruch 2, das ferner Folgendes umfasst:
eine Pumpe (23), durch die der Brennstoffzelle Wasserstoff zugeführt wird, wobei die Pumpe konfiguriert ist, durch die Antriebsvorrichtung für den Antrieb des Kompressors angetrieben zu werden.

## Revendications

1. Véhicule volant (1) comprenant une pile (10) à combustible, et un moteur (50) configuré pour entraîner une hélice (4), et un système (40) d'eau de refroidissement en circulation, le véhicule volant comportant :
une pompe (41) à eau de refroidissement par laquelle de l'eau de refroidissement du système d'eau de refroidissement en circulation est mise en circulation pour refroidir la pile à combustible, la pompe étant entraînée par le moteur configuré pour entraîner une hélice.

2. Véhicule volant selon la revendication 1, comportant en outre :
un dispositif d'entraînement qui est différent du moteur servant à entraîner l'hélice, et
un compresseur (31) servant à fournir de l'air à la pile à combustible, le compresseur étant configuré pour être entraîné par le dispositif d'entraînement.

3. Véhicule volant selon la revendication 2, comportant en outre :
une pompe (23) par laquelle de l'hydrogène est fourni à la pile à combustible, la pompe étant configurée pour être entraînée par le dispositif d'entraînement servant à entraîner le compresseur.
